# EUROPÄISCHE PATENTSCHRIFT

(11) **EP 3 075 042 B1**
(45) Veröffentlichungstag und Bekanntmachung des Hinweises auf die Patenterteilung: **06.03.2019**
(21) Anmeldenummer: 15701306.1
(22) Anmeldetag: 09.01.2015
(51) Int. Cl.: H01T 1/20, F02P 23/04, H01T 2/00

(54) **ÜBERSPANNUNGSSCHUTZ MIT EINER FUNKENSTRECKE**
SURGE PROTECTOR COMPRISING A SPARK GAP
DISPOSITIF DE PROTECTION CONTRE LES SURTENSIONS COMPORTANT UN ÉCLATEUR

(30) Priorität: 31.01.2014 DE 102014201754
(43) Veröffentlichungstag der Anmeldung: 05.10.2016
(73) Patentinhaber: Siemens Aktiengesellschaft, 80333 München (DE)
(72) Erfinder: HOFSTETTER, Michael, 81371 München (DE); LANGE, Dennie, 91058 Erlangen (DE)
(86) Internationale Anmeldenummer: PCT/EP2015/050297
(87) Internationale Veröffentlichungsnummer: WO 2015/113793

(56) Entgegenhaltungen:
- DE-A1-102004 002 582
- DE-A1-102010 042 453

## Beschreibung

Die Erfindung betrifft einen Überspannungsschutz mit einer Funkenstrecke und mit einem Laser zum Zünden der Funkenstrecke.

Ein derartiger Überspannungsschutz ist aus der Offenlegungsschrift DE 10 2004 002 582 A1 bekannt. Bei diesem bekannten Überspannungsschutz ist eine Funkenstrecke auf einer elektrisch isoliert aufgestellten Plattform angeordnet, wobei sich diese Plattform auf einem Hochspannungspotential befindet. Zum Zünden der Funkenstrecke wird ein Laserpuls mittels eines Lichtwellenleiters zu der Funkenstrecke geführt. Hierbei besteht jedoch das Problem, dass die hochenergetischen Laserpulse (welche zum Zünden der Funkenstrecke notwendig sind) durch die hohe lokale Intensität den Lichtwellenleiter beschädigen können. Um eine derartige Beschädigung des Lichtwellenleiters zu vermeiden, muss bei dem bekannten Überspannungsschutz ein energetisch hoch belastbarer und damit teurer Lichtwellenleiter eingesetzt werden.

Der Erfindung liegt die Aufgabe zugrunde, einen Überspannungsschutz der eingangs genannten Art und ein Verfahren zum Zünden einer Funkenstrecke eines Überspannungsschutzes anzugeben, welche kostengünstig realisiert werden können.

Diese Aufgabe wird erfindungsgemäß gelöst durch einen Überspannungsschutz nach dem Patentanspruch 1 und durch ein Verfahren nach dem Patentanspruch 7. Vorteilhafte Ausgestaltungen des Überspannungsschutzes und des Verfahrens sind in den jeweiligen abhängigen Patentansprüchen angegeben.

Offenbart wird ein Überspannungsschutz mit einer Funkenstrecke (die einander gegenüberliegende Elektroden aufweist) und mit einem Laser zum Zünden der Funkenstrecke, wobei zum Erzeugen von Laserstrahlung ein laseraktives Medium des Lasers an der Funkenstrecke angeordnet ist, und die Pumpquelle des Lasers beabstandet von dem laseraktiven Medium angeordnet ist. Dabei ist besonders vorteilhaft, dass das laseraktive Medium an der Funkenstrecke angeordnet ist. Dadurch ist es nicht notwendig, die erzeugte Laserstrahlung (z. B. mittels eines Lichtwellenleiters) zu der Funkenstrecke zu übertragen. Ein energetisch hoch belastbarer Lichtwellenleiter wird also nicht benötigt. Weiterhin ist dabei vorteilhaft, dass die Pumpquelle des Laser beabstandet von dem laseraktiven Medium angeordnet ist. Damit wird eine räumliche Trennung/Entkopplung zwischen dem laseraktiven Medium und der Pumpquelle erreicht. Dadurch lässt sich beispielsweise die Pumpquelle einfach und kostengünstig mit elektrischer Energie versorgen, wohingegen das laseraktive Medium unmittelbar an der Funkenstrecke angeordnet sein kann.

Der Überspannungsschutz ist so ausgestaltet, dass die Pumpquelle und das laseraktive Medium mittels einer Übertragungsfaser, insbesondere mittels eines Lichtwellenleiters, verbunden sind. Durch Verwendung einer derartigen Übertragungsfaser, insbesondere eines Lichtwellenleiters, lässt sich vorteilhafterweise ein großer Abstand zwischen der Pumpquelle und dem laseraktiven Medium realisieren. Dieser Abstand kann beispielsweise bis zu mehreren hundert Metern betragen. Durch die Übertragungsfaser wird außerdem eine galvanische Trennung zwischen der Pumpquelle und dem laseraktiven Medium realisiert, so dass die Pumpquelle und das laseraktive Medium auf unterschiedlich hohen elektrischen Potentialen angeordnet sein können.

Der Überspannungsschutz kann auch so ausgestaltet sein, dass die Übertragungsfaser frei von laseraktiven Medien ist. Dadurch kann eine einfache und kostengünstige Übertragungsfaser, insbesondere ein einfacher und kostengünstiger Lichtwellenleiter, verwendet werden. Darüber hinaus wird die Übertragungsfaser/der Lichtwellenleiter nur mit dem Pumplicht belastet und nicht mit der hochenergetischen Laserstrahlung, so dass die Übertragungsfaser/der Lichtwellenleiter nur für geringe Energiedichten ausgelegt zu sein braucht. Deshalb kann ein einfacher und kostengünstiger Lichtwellenleiter bzw. Übertragungsfaser verwendet werden.

Der Überspannungsschutz ist so realisiert, dass die Funkenstrecke und das laseraktive Medium auf einer elektrisch isoliert aufgestellten Plattform angeordnet sind, die sich auf einem Hochspannungspotential befindet. Diese Plattform kann zum Tragen von mindestens einem elektrischen Bauteil vorgesehen sein, das vor Überspannung zu schützen ist. Die Pumpquelle des Lasers kann mit Erdpotential verbunden sein. Hierbei ist besonders vorteilhaft, dass die sich auf Erdpotential befindende Pumpquelle einfach und kostengünstig mit elektrischer Energie versorgt werden kann. Beispielsweise kann diese Pumpquelle an ein herkömmliches Wechselstrom-Energieversorgungsnetz angeschlossen werden und auf diese Art und Weise mit elektrischer Energie versorgt werden. Das Pumplicht der Pumpquelle wird dann über die Übertragungsfaser/den Lichtwellenleiter zu dem laseraktiven Medium übertragen, aufgrund der durch die Übertragungsfaser/den Lichtwellenleiter realisierten galvanischen Trennung tritt dabei keine unerwünschte Beeinflussung zwischen der mit Erdpotential verbundenen Pumpquelle und der mit Hochspannungspotential verbundenen Plattform auf.

Der Überspannungsschutz kann auch so realisiert sein, dass zwischen der Funkenstrecke und dem laseraktiven Medium eine Optik zum Fokussieren der von dem laseraktiven Medium erzeugten Laserstrahlung angeordnet ist. Mittels dieser Optik kann die Laserstrahlung auf die Funkenstrecke fokussiert werden, so dass die Funkenstrecke sicher und zuverlässig gezündet werden kann.

Der Überspannungsschutz kann auch so realisiert sein, dass das laseraktive Medium starr (d.h. insbesondere unbeweglich) an die Funkenstrecke angekoppelt ist. Diese starre Kopplung zwischen laseraktivem Medium und Funkenstrecke hat den Vorteil, dass auch im rauen Alltagsbetrieb (bei dem beispielsweise Vibrationen oder Erschütterungen auftreten können) die Laserstrahlung stets sicher in die Funkenstrecke eingekoppelt wird. Durch die starre Kopplung zwischen laseraktivem Medium und Funkenstrecke wird weiterhin sichergestellt, dass die Laserstrahlung immer im selben winkel in den Raum zwischen den Elektroden der Funkenstrecke eintritt. Eine derartige starre bzw. unbewegliche Kopplung zwischen laseraktivem Medium und Funkenstrecke kann auch als eine "quasi-monolithische" Kopplung bezeichnet werden.

Der Überspannungsschutz kann auch so realisiert sein, dass die Funkenstrecke Teil eines Zündkreises zum Zünden einer Hauptfunkenstrecke ist. Dadurch ist es mit Vorteil möglich, mittels des Lasers zunächst eine Funkenstrecke kleiner Leistung zu zünden, woraufhin diese Funkenstrecke dann zum Zünden einer Hauptfunkenstrecke größerer Leistung verwendet wird.

Offenbart wird weiterhin ein Verfahren zum Zünden einer Funkenstrecke (die einander gegenüberliegende Elektroden aufweist) mittels eines Lasers, wobei bei dem Verfahren
- Pumplicht zum Betreiben des Lasers von einer Pumpquelle bereitgestellt wird, die beabstandet von einem laseraktiven Medium des Lasers angeordnet ist, und
- der Laserstrahl von dem laseraktiven Medium erzeugt wird, wobei das laseraktive Medium an der Funkenstrecke angeordnet ist.

Dieses Verfahren läuft so ab, dass das Pumplicht mittels einer Übertragungsfaser, insbesondere mittels eines Lichtwellenleiters, von der Pumpquelle zu dem laseraktiven Medium übertragen wird.

Das Verfahren ist so ausgestaltet, dass die Funkenstrecke und das laseraktive Medium auf einer elektrisch isoliert aufgestellten Plattform angeordnet sind, die sich auf einem Hochspannungspotential befindet. Diese Plattform kann zum Tragen von mindestens einem elektrischen Bauteil vorgesehen sein, das vor Überspannung zu schützen ist. Die Pumpquelle des Lasers kann mit Erdpotential verbunden sein.

Diese Verfahrensvarianten weisen gleichartige Vorteile auf, wie sie oben im Zusammenhang mit dem Überspannungsschutz angegeben sind.

Im Folgenden wird die Erfindung anhand von Ausführungsbeispielen näher erläutert: Dazu ist in
- Figur 1: ein Überspannungsschutz nach dem Stand der Technik und in
- Figur 2: eine Ausführungsbeispiel des erfindungsgemäßen Überspannungsschutzes und Verfahrens dargestellt.

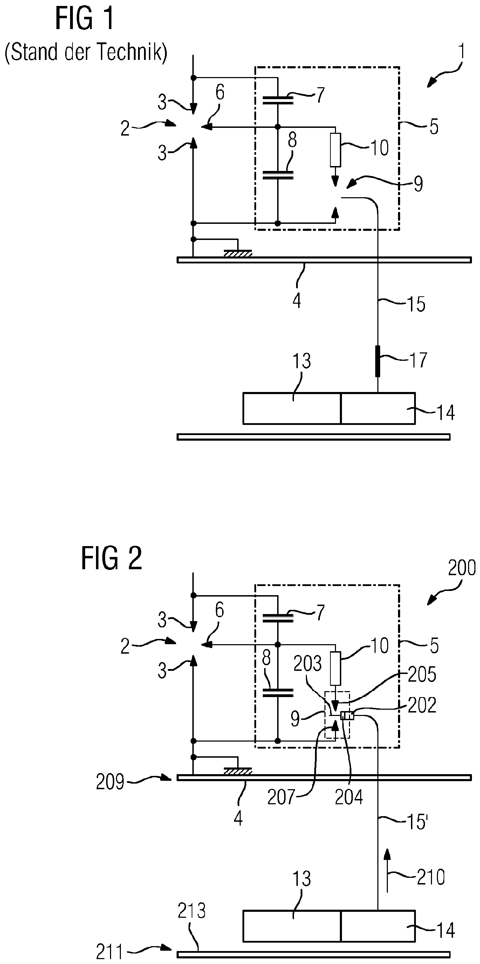

In Figur 1 ist der aus der Offenlegungsschrift
DE 10 2004 002 582 A1 bekannte Überspannungsschutz 1 dargestellt. Dieser Überspannungsschutz 1 weist eine Hauptfunkenstrecke 2 mit zwei Hauptelektroden 3 auf. Der Überspannungsschutz 1 ist auf einer elektrisch isoliert aufgestellten Plattform 4 angeordnet, die über säulenförmige (figürlich nicht dargestellte) Isolatoren an einer sich auf Erdpotential befindenden Umgebung abgestützt ist. Die untere Hauptelektrode 3 ist elektrisch mit dem Potential der Plattform 4 verbunden, beispielsweise mit einem Hochspannungspotential der Plattform 4. Die obere Hauptelektrode 3 befindet sich auf einem anderen elektrischen Potential, beispielsweise auf einem Hochspannungspotential eines Hochspannungsdrehstromnetzes. Zwischen den Hauptelektroden 3 kann eine Spannung in der Größenordnung von beispielsweise einigen Hundert kV anliegen, zum Beispiel 160 kV.

Parallel zu der Hauptfunkenstrecke 2 sind diejenigen elektrischen bzw. elektronischen Bauteile geschaltet, welche mittels der Hauptfunkenstrecke 2 vor Überspannung geschützt werden sollen. Bei diesen Bauteilen kann es sich beispielsweise um Kondensatoren handeln. (Diese zu schützenden Bauteile sind in den Figuren nicht dargestellt.)

Zum Zünden der Funkenstrecke 2 ist ein Zündkreis 5 mit einer Zündelektrode 6 vorgesehen, wobei der Zündkreis 5 einen kapazitiven Spannungsteiler mit einem ersten Kondensator 7 und einem zweiten Kondensator 8 (Zündkondensator 8) aufweist. Der zweite Kondensator 8 ist durch einen Parallelzweig überbrückbar. In dem Parallelzweig ist eine Auslösefunkenstrecke 9 und in Reihenschaltung zu dieser ein ohmscher Widerstand 10 angeordnet. Zum Zünden der Auslösefunkenstrecke 9 ist ein Faserlaser 17 vorgesehen, dessen Laserpulse mittels eines Lichtwellenleiters 15 zu der Auslösefunkenstrecke 9 übertragen werden.

Auf Erdpotential sind ein Schutzgerät 13 und ein Pumplaser 14 angeordnet. Der Pumplaser 14 dient zum Pumpen des Faserlasers 17. Das Schutzgerät (Schutztechnikgerät) 13 ist mit figürlich nicht dargestellten Messgebern/Sensoren, wie z. B. Spannungsmessern, verbunden, so dass Messwerte der an dem zu überwachenden Bauteil abfallenden Spannung dem Schutzgerät 13 zuführbar sind und Überspannungen von dem Schutzgerät 13 erkannt werden können.

Die Laserpulse des Faserlasers 17 werden Zündlicht genannt. Die Laserpulse werden über den Lichtwellenleiter 15 zur Auslösefunkenstrecke 9 geführt. Diese Laserpulse sind so intensiv, dass ein optischer Durchbruch in der Auslösefunkenstrecke 9 erzeugt wird und damit die Auslösefunkenstrecke 9 gezündet wird. Um Beschädigungen des Lichtwellenleiters 15 durch diese intensiven und energiereichen Laserpulse zu vermeiden, muss der Lichtwellenleiter 15 entsprechend robust und energiebeständig ausgeführt sein, wodurch der Lichtwellenleiter 15 kostenintensiv ist.

In Figur 2 ist ein Ausführungsbeispiel des erfindungsgemäßen Überspannungsschutzes 200 dargestellt. Dieser Überspannungsschutz 200 weist in Übereinstimmung mit Figur 1 eine Hauptfunkenstrecke 2, eine obere und eine untere Hauptelektrode 3, eine Plattform 4 (Hochspannungsplattform 4), einen Zündkreis 5, eine Zündelektrode 6, einen ersten Kondensator 7, einen zweiten Kondensator 8, eine Auslösefunkenstrecke 9, einen ohmschen Widerstand 10, ein Schutzgerät 13 und eine Pumpquelle 14 auf. Im Unterschied zu dem Überspannungsschutz nach der Figur 1 ist das laseraktive Medium 202 (des zum Zünden der Auslösefunkenstrecke 9 dienenden Lasers) an der Auslösefunkenstrecke 9 angeordnet. Dieses laseraktive Medium 202 grenzt unmittelbar an die Auslösefunkenstrecke 9 an, so dass die von dem laseraktiven Medium 202 erzeugte Laserstrahlung unmittelbar die Auslösefunkenstrecke 9 erreicht. Der zum Zünden der Auslösefunkenstrecke 9 verwendete Laser weist neben dem laseraktiven Medium 202 die Pumpquelle 14 auf, wobei die Pumpquelle 14 mittels einer (optischen) Übertragungsfaser 15' mit dem laseraktiven Medium verbunden ist. Die Übertragungsfaser ist im Ausführungsbeispiel ein Lichtwellenleiter 15'. Der Lichtwellenleiter 15' ist frei von laseraktiven Medien. Die Pumpquelle 14 des Lasers ist mit Erdpotential verbunden und befindet sich außerhalb der Plattform 4. Die Pumpquelle 14 kann als eine herkömmliche Pumpquelle ausgestaltet sein, welche z. B. mittels Laserdioden das Pumplicht (Pumpstrahlung) erzeugt.

Als laseraktives Medium wird das Material bezeichnet, das durch stimulierte Emission die Laserstrahlung erzeugt. Laseraktives Medium wird auch als Lasermedium, aktives Lasermedium oder aktives Medium bezeichnet. Als laseraktives Medium 202 kann im Ausführungsbeispiel ein hochdotierter Festkörperkristall verwendet werden.

Das laseraktive Medium 202 befindet sich in einem Laserkopf, welcher an die Auslösefunkenstrecke 9 angekoppelt ist. Vorteilhafterweise ist das laseraktive Medium 202 bzw. der Laserkopf starr (d. h. unbeweglich) an die Auslösefunkenstrecke 9 angekoppelt, so dass die Laserstrahlung stets unter gleichen Bedingungen (gleicher Einfallswinkel etc.) in die Auslösefunkenstrecke einfällt. Das laseraktive Material 202 bzw. der Laserkopf kann sogar als ein Teil der Auslösefunkenstrecke 9 betrachtet werden. Die starre (quasi-monolithische) Befestigung des laseraktivem Mediums 202 an der Auslösefunkenstrecke 9 gewährleistet eine weitestgehende Einflussfreiheit von äußeren Störungen (wie z. B. Vibrationen) auf den Ort des Laserfokus in der Funkenstrecke.

Bei der Auslösefunkenstrecke 9 handelt es sich um eine gekapselte Funkenstrecke, welche in einem Gehäuse angeordnet ist. Das laseraktive Medium 202 ist starr mit dem Gehäuse der Auslösefunkenstrecke 9 verbunden. Diese Verbindung ist derart realisiert, dass die von dem laseraktiven Medium 202 erzeugte Laserstrahlung in den Raum zwischen der ersten Elektrode 205 und der zweiten Elektrode 207 der Auslösefunkenstrecke 9 eintreten kann.

Die Pumpquelle 14 ist räumlich entfernt von dem laseraktiven Medium 202 angeordnet. Die räumliche Entfernung wird mittels des Lichtwellenleiters 15' überbrückt. Es wird hier also mittels des laseraktiven Mediums 202 und der Pumpquelle 14 ein örtlich verteilter Laser realisiert, welcher auch als ein (örtlich) entkoppelter Laser bezeichnet werden kann. Hierbei ist besonders vorteilhaft, dass der Lichtwellenleiter 15' nicht die hochenergetische kohärente Laserstrahlung übertragen muss (wie es beim Stand der Technik gemäß der Figur 1 der Fall ist), sondern dass mit dem Lichtwellenleiter 15' lediglich das Pumplicht von der Pumpquelle zu dem laseraktiven Medium übertragen zu werden braucht. Daher wird der Lichtwellenleiter 15' energetisch vergleichsweise wenig belastet, so dass hier ein kostengünstiger Lichtwellenleiter zum Einsatz kommen kann.

Das laseraktive Medium 202 des Laserkopfs absorbiert das über den Lichtwellenleiter 15' übertragene Pumplicht (welches von der Pumpquelle 14 stammt), so dass bei einer ausreichend hohen Pumpleistung der Pumpquelle 14 eine Besetzungsinversion und das Entstehen von Laserstrahlung 203 erfolgt (Lasing). Optional kann eine Optik 204 zum Fokussieren der Laserstrahlung vorgesehen sein, so dass diese Laserstrahlung noch zielgenauer in die Auslösefunkenstrecke 9 eingebracht werden kann.

Der Lichtwellenleiter 15' überträgt also lediglich das Pumplicht (also kein hochenergetisches Laserlicht), von der auf Erdpotential angeordneten Pumpquelle 14 zu der Plattform 4; der Lichtwellenleiter 15' besitzt selbst kein laseraktives Medium, er ist also kein Faserlaser. Der Lichtwellenleiter 15' entkoppelt örtlich die Pumpquelle 14 von dem laseraktiven Medium 202; die Pumpquelle 14, der Lichtwellenleiter 15' und das laseraktive Medium 202 stellen also einen Laser dar, und zwar einen entkoppelten Laser, genauer gesagt einen örtlich entkoppelten Laser bzw. örtlich verteilten Laser.

Bei der Übertragung des Pumplichts gemäß Figur 2 ist die lokale Intensität des Pumplichts in dem Lichtwellenleiter 15' erheblich reduziert gegenüber der lokalen Intensität im Lichtwellenleiter 15 bei der Übertragung der Laserstrahlung gemäß der Figur 1. Dadurch kann ein kostengünstigerer Lichtwellenleiter verwendet werden und/oder aufgrund des niedrigeren Verschleißes verlängert sich die Lebensdauer der Fasern des Lichtwellenleiters. Die Entkopplung bzw. Trennung des laseraktiven Mediums 202 vom Lichtwellenleiter 15' und die Ausprägung des laseraktiven Mediums als ein eigenes Bauteil am Ende des Lichtwellenleiters 15' ermöglicht zudem eine bessere Justierbarkeit und Wartung des Lasers und erleichtert den Austausch oder die Erweiterung der optischen Komponenten des Lasers. Beispielsweise ist es möglich, lediglich den Laserkopf mit dem laseraktiven Medium 202 auszutauschen. Dadurch lassen sich Parameter des Lasers, wie beispielsweise die Fokuslänge und/oder die Spotgröße der Laserstrahlung, verändern. Eine teilweise redundante Ausführung der Komponenten des Lasers ist leicht realisierbar. Beispielsweise könnten aus Sicherheitsgründen zwei redundante Lichtwellenleier 15' von der Pumpquelle zur Plattform 4 verlegt werden, wobei auf der Plattform 4 nur ein Laserkopf mit dem laseraktiven Medium 202 vorhanden ist.

Optional kann der Lichtwellenleiter 15' (z. B. mittels eines weiteren Lasers unterschiedlicher Wellenlänge) auf das Vorliegen von Unterbrechungen überwacht werden. Diese Überwachung gestaltet sich besonders einfach, da der Lichtwellenleiter 15' frei von laseraktiven Medien ist.

Das unmittelbar an der Funkenstrecke 9 angeordnete laseraktive Medium 202 ermöglicht es, unterschiedliche Fokussierungsarten einzusetzen. Zum einen ist es möglich, mittels der optionalen Optik 204 (die eine oder mehrere Fokussierlinsen enthält) die Laserstrahlung 203 zu fokussieren. Diese Optik 204 kann zwischen der Funkenstecke 9 und dem laseraktiven Medium 202 angeordnet sein. Zum anderen kann aber auch auf eine derartige Optik 204 bzw. Linse verzichtet werden und es kann die als solches bekannte Selbstfokussierung des Lasers genutzt werden. Dies führt zu einer weiteren Reduzierung der Anzahl der Komponenten und damit zu einer Reduzierung der Fehleranfälligkeit des Systems. Insgesamt ergibt sich damit eine deutliche Kostenreduzierung.

Die elektrisch isoliert aufgestellte Plattform 4, die sich auf Hochspannungspotential 209 befindet, trägt die Funkenstrecke 9 sowie das laseraktive Medium 202. Außerdem trägt diese Plattform 4 das elektrische bzw. elektronische Bauteil bzw. die Bauteile, welche mittels des Überspannungsschutzes vor Überspannung zu schützen sind. Durch das Anordnen der Pumpquelle 14 auf Erdpotential 211 ist es nicht notwendig, eine (aufwendige und teure) elektrische Energieversorgung des laseraktiven Mediums 202 auf dem Hochspannungspotential der Plattform 4 zu realisieren. Auch dies führt zu erheblichen Kostenvorteilen.

Der Überspannungsschutz 200 bzw. das Verfahren zum Zünden der Funkenstrecke 9 funktioniert wie folgt: Sobald das Schutzgerät 13 eine Überspannung an dem zu schützenden Bauteil erkennt, gibt es ein Signal an die Pumpquelle 14 des Lasers ab, woraufhin die Pumpquelle 14 das Pumplicht in den Lichtwellenleiter einspeist. Die Pumpquelle 14 erhält ihre Energie aus einem (in der Figur 2 nicht dargestellten) Wechselstrom-Energieversorgungsnetz auf Niederspannungs- oder Mittelspannungsniveau. Die Pumpquelle 14 erzeugt sogenanntes Pumplicht (also kein hochenergetisches Laserlicht). Der Lichtwellenleiter 15' überträgt das Pumplicht 210 (und damit die zum Pumpen des Lasers notwendige Pumpenergie) zu dem laseraktiven Medium 202, welches auf der Plattform 4 angeordnet ist. Der Lichtwellenleiter 15' weist dabei eine für das Pumplicht ausreichend hohe optischen Transparenz auf. Das laseraktive Medium 202 absorbiert das Pumplicht. Dadurch wird (bei einer ausreichend hohen Pumpleistung der Pumpquelle 14) eine Besetzungsinversion in dem laseraktiven Medium 202 auftreten. In dem laseraktiven Medium 202 entsteht daraufhin die Laserstrahlung 203, welche in die Auslösefunkenstrecke 9 eingekoppelt wird. Optional kann diese Laserstrahlung mittels der Optik 204 fokussiert werden.

Aufgrund der Laserstrahlung wird die Auslösefunkenstrecke 9 gezündet, d. h. es beginnt ein Lichtbogen zwischen der ersten Elektrode 205 und der zweiten Elektrode 207 der Auslösefunkenstrecke zu brennen. Durch diese gezündete Auslösefunkenstrecke (d. h. durch den brennenden Lichtbogen) wird der zweite Kondensator 8 des Zündkreises 5 überbrückt. Dadurch wird die Zündelektrode 6 nahezu auf das elektrische Potential der Plattform 4 gebracht. Da der Abstand zwischen der Zündelektrode 6 und der oberen Hauptelektrode 3 geringer ist als der Abstand zwischen den beiden Hauptelektroden 3, beginnt ein Lichtbogen zwischen der oberen Hauptelektrode 3 und der Zündelektrode 6 zu brennen. Aufgrund dieses Lichtbogens wird der erste Kondensator 7 überbrückt, wodurch sich der zweite Kondensator 8 wieder aufladen kann. Sobald der zweite Kondensator 8 eine ausreichend hohe Kondensatorspannung aufweist, beginnt ein Lichtbogen zwischen der Zündelektrode 6 und der unteren Hauptelektrode 3 zu brennen, so dass jetzt die Hauptfunkenstrecke 2 komplett gezündet ist. Dadurch wird ein parallel zur Hauptfunkenstrecke 2 geschaltetes zu schützendes Bauelement (welches in der Figur 2 nicht dargestellt ist) vor Überspannung geschützt.

In einem weiteren (figürlich nicht dargestellten) Ausführungsbeispiel kann mittels des laseraktiven Mediums 202 auch direkt die Hauptfunkenstrecke 2 gezündet werden. Da bei der Hauptfunkenstrecke 2 höhere Energien auftreten als bei der Auslösefunkenstrecke 9 (es fließen insbesondere größere Ströme und treten höhere Temperaturen auf), ist in diesem Fall das laseraktive Medium 202 entsprechend vor Hitze zu schützen.

Insbesondere können mit dem beschriebenen Überspannungsschutz Bauteile/Bauelemente (wie zum Beispiel Kondensatoren oder Ableiter) geschützt werden, welche parallel zu der Hauptfunkenstrecke 2 angeordnet sind. Beispielsweise in Serienkompensationsanlagen für Hochspannungswechselstromnetze kann ein derartiger Überspannungsschutz mit Funkenstrecken zum Schutz der Kondensatorbänke und/oder Ableiterbänke eingesetzt werden. Die Serienkompensationsanlage sowie die Funkenstrecke befinden sich dabei auf der gegen das Erdpotential isolierten Hochspannungsplattform. Eine Leitwarte mit der Überwachungselektronik (z. B. mit Schutzgeräten) befindet sich dabei nicht auf der Plattform 4, sondern auf der Erde 213, also auf Erdpotential 211. Die Pumpquelle 14 ist dann ebenfalls auf der Erde 213, also auf Erdpotential 211 angeordnet.

Es wurde ein Überspannungsschutz mit einer Funkenstrecke sowie ein Verfahren zum Zünden einer Funkenstrecke beschrieben, mit denen auf kostengünstige Art und Weise eine Funkenstrecke gezündet und damit ein Überspannungsschutz eines Bauteils realisiert werden kann.

## Patentansprüche

1. Überspannungsschutz (200) mit einer Funkenstrecke (9) und mit einem Laser (202, 14) zum Zünden der Funkenstrecke (9), wobei eine Pumpquelle (14) des Lasers von einem laseraktiven Medium (202) beabstandet angeordnet ist,
**dadurch gekennzeichnet, dass**
- zum Erzeugen von Laserstrahlung (203) das laseraktive Medium (202) des Lasers an der Funkenstrecke (9) angeordnet ist,
- die Pumpquelle (14) und das laseraktive Medium (202) mittels einer Übertragungsfaser (15'), insbesondere mittels eines Lichtwellenleiters (15'), verbunden sind, und
- die Funkenstrecke (9) und das laseraktive Medium (202) auf einer elektrisch isoliert aufgestellten Hochspannungsplattform (4) angeordnet sind.

2. Überspannungsschutz nach Anspruch 1,
**dadurch gekennzeichnet, dass**
- die Übertragungsfaser (15') frei von laseraktiven Medien ist.

3. Überspannungsschutz nach einem der vorhergehenden Ansprüche,
**dadurch gekennzeichnet, dass**
- die Pumpquelle (14) des Lasers mit Erdpotential (211) verbunden ist.

4. Überspannungsschutz nach einem der vorhergehenden Ansprüche,
**dadurch gekennzeichnet, dass**
- zwischen der Funkenstrecke (9) und dem laseraktiven Medium (202) eine Optik (204) zum Fokussieren der von dem laseraktiven Medium (202) erzeugten Laserstrahlung (203) angeordnet ist.

5. Überspannungsschutz nach einem der vorhergehenden Ansprüche,
**dadurch gekennzeichnet, dass**
- das laseraktive Medium (202) starr an die Funkenstrecke (9) angekoppelt ist.

6. Überspannungsschutz nach einem der vorhergehenden Ansprüche,
**dadurch gekennzeichnet, dass**
- die Funkenstrecke (9) Teil eines Zündkreises (5) zum Zünden einer Hauptfunkenstrecke (2) ist.

7. Verfahren zum Zünden einer Funkenstrecke (9) eines Überspannungsschutzes mittels eines Lasers (202, 14), wobei bei dem Verfahren
- Pumplicht (210) zum Betreiben des Lasers von einer Pumpquelle (14) bereitgestellt wird, die beabstandet von einem laseraktiven Medium (202) des Lasers angeordnet ist,
- das Pumplicht (210) mittels einer Übertragungsfaser (15'), insbesondere mittels eines Lichtwellenleiters (15'), von der Pumpquelle (14) zu dem laseraktiven Medium (202) übertragen wird, und
- ein Laserstrahl (203) von dem laseraktiven Medium (202) erzeugt wird, wobei das laseraktive Medium (202) an der Funkenstrecke (9) angeordnet ist und wobei die Funkenstrecke (9) und das laseraktive Medium (202) auf einer elektrisch isoliert aufgestellten Hochspannungsplattform (4) angeordnet sind.

8. Verfahren nach Anspruch 7,
**dadurch gekennzeichnet, dass**
- die Pumpquelle (14) des Lasers mit Erdpotential (211) verbunden ist.

## Claims

1. Surge arrester (200) having a spark gap (9) and having a laser (202, 14) for igniting the spark gap (9), wherein a pump source (14) of the laser is arranged at a distance from a laser-active medium (202),
**characterized in that**
- the laser-active medium (202) of the laser is arranged at the spark gap (9) in order to generate laser radiation (203),
- the pump source (14) and the laser-active medium (202) are connected by means of a transmission fibre (15'), in particular by means of an optical waveguide (15'), and
- the spark gap (9) and the laser-active medium (202) are arranged on a high-voltage platform (4), which is set up in an electrically insulating manner.

2. Surge arrester according to Claim 1,
**characterized in that**
- the transmission fibre (15') is free of laser-active media.

3. Surge arrester according to either of the preceding claims,
**characterized in that**
- the pump source (14) of the laser is connected to earth potential (211).

4. Surge arrester according to one of the preceding claims, Frei verwendbar
**characterized in that**
- an optical unit (204) is arranged between the spark gap (9) and the laser-active medium (202) in order to focus the laser radiation (203) generated by the laser-active medium (202).

5. Surge arrester according to one of the preceding claims,
**characterized in that**
- the laser-active medium (202) is rigidly coupled to the spark gap (9).

6. Surge arrester according to one of the preceding claims,
**characterized in that**
- the spark gap (9) is part of an ignition circuit (5) for igniting a main spark gap (2).

7. Method for igniting a spark gap (9) of a surge arrester by means of a laser (202, 14), wherein, in the method,
- pump light (210) for operating the laser is provided by a pump source (14), which is arranged at a distance from a laser-active medium (202) of the laser,
- the pump light (210) is transmitted from the pump source (14) to the laser-active medium (202) by means of a transmission fibre (15'), in particular by means of an optical waveguide (15'), and
- a laser beam (203) is generated by the laser-active medium (202), wherein the laser-active medium (202) is arranged at the spark gap (9) and wherein the spark gap (9) and the laser-active medium (202) are arranged on a high-voltage platform (4), which is set up in an electrically insulating manner.

8. Method according to Claim 7,
**characterized in that**
- the pump source (14) of the laser is connected to earth potential (211).

## Revendications

1. Dispositif (200) de protection vis-à-vis des surtensions, comprenant un éclateur (9) et un laser (202, 14) pour amorcer l'éclateur (9), une source (14) de pompage du laser étant disposée à distance d'un milieu (202) à activité laser,
**caractérisé en ce que**
- pour produire le rayonnement (203) laser, le milieu (202) à activité laser du laser est disposé sur l'éclateur (9),
- la source (14) de pompage et le milieu (202) à activité laser sont reliés au moyen d'une fibre (15') de transmission, notamment au moyen d'une fibre (15') optique et
- l'éclateur (9) et le milieu (202) à activité laser sont disposés sur une plateforme (4) de haute tension isolée électriquement.

2. Dispositif de protection vis-à-vis des surtensions suivant la revendication 1,
**caractérisé en ce que**
- la fibre (15') de transmission est exempte de milieu à activité laser.

3. Dispositif de protection vis-à-vis des surtensions suivant l'une des revendications précédentes,
**caractérisé en ce que**
- la source (14) de pompage du laser est reliée au potentiel (211) de terre.

4. Dispositif de protection vis-à-vis des surtensions suivant l'une des revendications précédentes,
**caractérisé en ce que**
- entre l'éclateur (9) et le milieu (202) à activité laser, est montée une optique (204) de focalisation du rayonnement (203) laser produit par le milieu (202) à activité laser.

5. Dispositif de protection vis-à-vis des surtensions suivant l'une des revendications précédentes,
**caractérisé en ce que**
- le milieu (202) à activité laser est couplé rigidement à l'éclateur (9).

6. Dispositif de protection vis-à-vis des surtensions suivant l'une des revendications précédentes,
**caractérisé en ce que**
- l'éclateur (9) fait partie d'un circuit (5) d'amorçage pour amorcer un éclateur (2) principal.

7. Procédé d'amorçage d'un éclateur (9) d'un dispositif de protection vis-à-vis des surtensions, procédé dans lequel
- on se procure, d'une source (14) de pompage, de la lumière (210) de pompage pour faire fonctionner le laser, la source étant disposée à distance d'un milieu (202) à activité laser du laser,
- on transmet, de la source (14) de pompage au milieu (202) à activité laser, la lumière (210) de pompage au moyen d'une fibre (15') de transmission, notamment au moyen d'une fibre (15') optique et
- on produit un faisceau (203) laser par le milieu (202) à activité laser, le milieu (202) à activité laser étant disposé sur l'éclateur (9) et l'éclateur (9) et le milieu (202) à activité laser étant disposés sur une plateforme (4) de haute tension isolée électriquement.

8. Procédé suivant la revendication 7,
**caractérisé en ce que**
- la source (14) de pompage du laser est reliée au potentiel (211) de terre
